# EUROPÄISCHE PATENTSCHRIFT

(11) **EP 3 470 650 B1**
(45) Veröffentlichungstag und Bekanntmachung des Hinweises auf die Patenterteilung: **21.10.2020**
(21) Anmeldenummer: 18197227.4
(22) Anmeldetag: 27.09.2018
(51) Int. Cl.: F02B 67/06, F16H 7/12, F16H 7/14

(54) **SPANNVORRICHTUNG FÜR EINEN STARTERGENERATOR EINER BRENNKRAFTMASCHINE SOWIE EINEN ZUGMITTELTRIEB MIT EINER SOLCHEN SPANNVORRICHTUNG**
CLAMPING DEVICE FOR A STARTER GENERATOR OF A COMBUSTION ENGINE AND A BELT DRIVE WITH SUCH A CLAMPING DEVICE
DISPOSITIF DE SERRAGE POUR UN GÉNÉRATEUR DE DÉMARRAGE D'UN MOTEUR À COMBUSTION INTERNE AINSI QUE POUR UN ENTRAÎNEMENT DE MOYEN DE TRACTION DOTÉ D'UN TEL DISPOSITIF DE SERRAGE

(30) Priorität: 10.10.2017 DE 102017218040
(43) Veröffentlichungstag der Anmeldung: 17.04.2019
(73) Patentinhaber: VOLKSWAGEN AKTIENGESELLSCHAFT, 38440 Wolfsburg (DE)
(72) Erfinder: Cornelius, Volker, 38162 Cremlingen (DE)

(56) Entgegenhaltungen:
- EP-A2- 1 249 639
- DE-A1- 2 819 333
- DE-A1- 10 044 645
- DE-A1-102007 025 231

## Beschreibung

Die Erfindung betrifft eine Spannvorrichtung für einen Startergenerator einer Brennkraftmaschine sowie einen Zugmitteltrieb mit einer solchen Spannvorrichtung. Insbesondere betrifft die Erfindung einen mittels eines Zugmittels angetriebenen Startergenerator, wie z.B. einen Riemenstartergenerator. Die Erfindung wurde vor allem für die Anwendung in Brennkraftmaschinen von Kraftfahrzeugen gemacht, insbesondere für den Antrieb von in Kraftfahrzeugen eingesetzten Brennkraftmaschinen. Die Erfindung kann aber grundsätzlich mit auch anders genutzten Brennkraftmaschinen verwendet werden. Es wird ergänzend auf Brennkraftmaschinen und auf Kraftfahrzeuge mit erfindungsgemäßen Spannvorrichtungen sowie auf Brennkraftmaschinen und auf Kraftfahrzeuge mit erfindungsgemäßen Zugmitteltrieben verwiesen.

Bei Startergeneratoren wechselt während des Betriebes das Zugtrum und das Leertrum im Zugmittel, abhängig davon, ob ein mit den Generator gekoppeltes Umlenkelement - wie im Starterbetrieb - aktiv angetrieben und somit ein treibendes Element ist oder ob ein mit dem Generator gekoppeltes Umlenkelement von dem Zugmittel angetrieben wird - wie im Generatorbetrieb. Dabei wird im Starterbetrieb von Startergeneratoren eine vergleichsweise hohe Spannung im Zugmittel benötigt. Im - zeitlich deutlich überwiegenden - Generatorbetrieb hingegen ist eine hohe Spannung im Zugmittel unerwünscht. Bei Riemenstartergeneratoren handelt es sich bei dem vorstehend genannten Zugmittel um Riemen und bei den Umlenkelementen üblicherweise um Riemenscheiben.

Aus der Praxis ist es bekannt, zur Erzeugung von hohen, im Starterbetrieb erforderlichen Zugmittelspannungen separate Spannvorrichtungen in Form von elektrisch einfahrenden Spannvorrichtungen zu verwenden. Nachteilig daran ist, dass diese zusätzliche Kosten und eine erhöhte Riemenreibung durch eine weitere Umlenkung verursachen.

Aus DE 100 44 645 A1 sind verschiedene Zugmitteltriebe zum Antrieb eines Startergenerators bekannt. Die Zugmitteltriebe, insbesondere wie diese gemäß Anspruch 1 und Anspruch 2 beschrieben sind, umfassen ein alle Riemenscheiben der Aggregate sowie eines Spannsystems verbindendes Zugmittel, wobei ein Aggregat mit einem begrenzt drehbaren Gehäuse versehen ist. Bei den Zugmitteltrieben gemäß Anspruch 1 wirkt zumindest eine an dem Zugmittel geführte Umlenkrolle mittelbar oder unmittelbar zusammen zur Bildung einer Vorrichtung, die in einem Betriebszustand ein von dem Aggregat induziertes Drehmoment zur Beeinflussung einer Vorspannung in dem Zugmittel nutzt. Bei den Umlenkrollen handelt es sich um zusätzlich vorgesehene Rollen. Bei den Zugmitteltrieben gemäß Anspruch 2 hingegen wirkt zumindest ein an dem Zugmittel geführtes, zusätzliches Spannsystem mittelbar oder unmittelbar zusammen zur Bildung einer Vorrichtung, die in einem Betriebszustand ein von dem Aggregat induziertes Drehmoment zur Beeinflussung einer Vorspannung in dem Zugmittel nutzt. Nachteilig an den in DE 100 44 645 A1 beschriebenen Systemen ist, dass zusätzliche Umlenkrollen und/oder weitere Spannsysteme erforderlich sind, um die gewünschte Zugmittelspannung zu erzeugen, was unter anderem mit einem erhöhten Gewicht und mit einer erhöhten Zugmittelreibung einhergeht.

Aus DE 28 19 333 ist ein Riementrieb für eine Brennkraftmaschine mit einer Spannvorrichtung bekannt. Die Spannvorrichtung umfasst ein Spannrad und mehrere Zahnräder, wobei mindestens eines der Räder in Richtung der durch die Riemenspannung auftretenden Kraft unmittelbar elastisch nachgiebig ausgebildet ist.

Aus DE 10 2007 025 231 A1 ist ein Riementrieb eines Verbrennungsmotors mit Starter-Generator bekannt. Zum Spannen eines umlaufenden Riemens ist eine Riemenspannvorrichtung vorgesehen, die eine von dem treibenden oder bremsenden Drehmoment abhängige Riemenspannkraft in den Riemen einleitet. Die Riemenspannvorrichtung soll insbesondere dadurch gebildet sein, dass der Starter-Generator mittels eines Scherenmechanismus oder einer Knickhebelanordnung beweglich abgestützt ist. Dabei soll die Drehung des Starter-Generators in eine geradlinige oder bogenförmige Bewegung umgeleitet werden, die entgegengesetzt zur Richtung einer vom Riemen auf die Riemenscheibe ausgeübten Zugkraft ist.

Aus EP 1 249 639 A2 ist eine Spannvorrichtung für einen zum Antrieb von Nebenaggregaten einer Brennkraftmaschine dienenden Riementrieb bekannt. Die Spannvorrichtung umfasst dabei eine erste unter Federvorspannung auf den Antriebsriemen wirkende erste Rolle, welche mit einer zweiten schwenkbeweglich angeordneten Rolle über ein Koppelglied derart verbunden ist, dass die zweite Rolle bei sich ändernden Trumkräften des Riementriebes verschwenkt wird.

Aus DE 100 44 645 A1 ist ein Zugmitteltrieb bekannt, wobei ein in dem Zugmitteltrieb angeordneter Startergenerator ein begrenzt drehbares Gehäuse aufweist und wobei eine Umlenkrolle mittelbar oder unmittelbar derart mit dem Gehäuse zusammenwirkt, dass die Vorspannkraft des Systems so ausgelegt ist, dass sie sich proportional zu einer Generatorausgangsleistung des Startergenerators anpasst. Der Startergenerator umfasst eine mit einem Rotor versehene Riemenscheibe. Das Gehäuse dient als Stator, an welchem die Umlenkrolle und/oder Spannsysteme angeordnet sind.

Der Erfindung liegt die Aufgabe zugrunde, eine Spannvorrichtung für einen Startergenerator sowie einen Zugmitteltrieb mit einer solchen Spannvorrichtung zur Verfügung zu stellen, mit welchen bedarfsweise eine ausreichend hohe Spannung im Zugmittel bereitgestellt werden kann, die ein geringes Bauteilgewicht aufweisen und welche eine möglichst geringe Zugmittelreibung verursachen.

Die Lösung der Aufgabe erfolgt erfindungsgemäß mit den Merkmalen der unabhängigen Ansprüche. Weitere praktische Ausführungsformen und Vorteile der Erfindung sind in Verbindung mit den abhängigen Ansprüchen beschrieben.

Eine erfindungsgemäße Spannvorrichtung für einen Startergenerator einer Brennkraftmaschine umfasst die Merkmale des Anspruchs 1. Bei dem erwähnten Halteelement handelt es sich insbesondere um einen sogenannten Nebenaggregatehalter oder ein sonstiges Element, wie beispielsweise ein Außengehäuse, insbesondere ein gegenüber der Brennkraftmaschine festgelegtes Element. Die Erfindung basiert auf dem Prinzip, dass die Generatorumlenkrolle selbst genutzt wird, um die Spannung des Zugmittels bedarfsweise so anzupassen, dass mit dem Zugmittel die jeweils erforderlichen Kräfte und Momente übertragen werden können. Dabei ist zum einen vorteilhaft, dass keine zusätzliche Umlenkung erforderlich ist, weil die Generatorumlenkrolle ein obligatorisches Element jedes Startergenerators ist. Insbesondere kann auf zusätzliche Umlenkelemente, wie beispielsweise elektrisch einfahrende Spannrollen, verzichtet werden. Ein weiterer Vorteil eine erfindungsgemäßen Vorrichtung besteht darin, dass das Spannen selbst in passiver Form erfolgen kann, d.h. kein zusätzliches Antriebselement erforderlich ist, um die Spannung im Zugmittel bedarfsweise zu erhöhen. Mit anderen Worten ausgedrückt, kann als "passiver Antrieb" einer erfindungsgemäßen Spannvorrichtung ein während des Antriebs der Generatorumlenkrolle entstehendes Moment genutzt werden, um die Generatorumlenkrolle selbst so - gemeinsam mit der Generatorwelle, auf welcher diese montiert ist - relativ zu den anderen Umlenkelementen eines Zugmitteltriebes eines Startergenerators derart zu bewegen, dass die Zugmittelspannung erhöht wird.

Erfindungsgemäß ist an dem Generatorgehäuse selbst oder an einem Gehäuseelement des Generatorgehäuses eine exzentrische Anordnung der Generatorwelle derart vorgesehen, dass durch eine Drehbewegung des Generatorgehäuses oder des Generatorelements eine Relativbewegung zwischen Generatorumlenkrolle und Halteelement bewirkt wird. Eine derartige Spannvorrichtung ist besonders kompakt gebaut und benötigt insgesamt nur sehr wenige Elemente. Konkret ist es lediglich erforderlich, das Generatorgehäuse selbst oder ein Gehäuseelement des Generatorgehäuses geeignet exzentrisch auszubilden und so innerhalb eines Zugmitteltriebes anzuordnen, dass bedarfsweise abhängig von dem jeweils an der Generatorumlenkrolle wirkenden Drehmoment und dessen Richtung eine ausreichend hohe Zugmittelspannung bereitgestellt wird. Zusammenfassend kann durch eine erfindungsgemäße Spannvorrichtung ein Element bereitgestellt werden, das ein nur geringes zusätzliches Gewicht aufweist, bedarfsweise stets eine ausreichend hohe Spannung im Zugmittel bereitstellt und die gesamte Zugmittelreibung in einem Zugmitteltrieb gering hält, weil die Spannung an den jeweiligen Betriebszustand angepasst erzeugt werden kann.

In einer praktischen Ausführungsform einer erfindungsgemäßen Spannvorrichtung ist die Generatorumlenkrolle gegenüber dem Halteelement derart angeordnet, dass abhängig von der Wirkrichtung des Drehmoments eine Relativbewegung zwischen Generatorumlenkrolle und Halteelement in unterschiedliche Spannrichtungen bewirkt wird. Damit ist insbesondere gemeint, dass sich die Generatorumlenkrolle im nicht drehenden Zustand in einer neutralen Mittelposition befindet und abhängig davon, ob ein rechtsdrehendes oder linksdrehendes Drehmoment auf die Generatorumlenkrolle wirkt, die Generatorumlenkrolle in eine erste Spannrichtung (bei positivem Drehmoment) und in eine zweite Spannrichtung (bei negativem Drehmoment) bewegt wird. Dies hat den Vorteil, dass die Spannvorrichtung bedarfsweise mit zwei verschiedenen Kennlinien ausgelegt werden kann, die von der Wirkrichtung des Drehmoments abhängig sind. Eine derartige Auslegung kann insbesondere über die kinematische und geometrische Ausbildung einer erfindungsgemäßen Spannvorrichtung erfolgen. Diesbezüglich wird nachfolgend noch auf verschiedene Ausführungsformen und die Auslegungsmöglichkeiten eingegangen.

In Bezug auf die zuletzt beschriebene Gestaltungsmöglichkeit einer erfindungsgemäßen Spannvorrichtung kann es insbesondere vorteilhaft sein, wenn das Generatorgehäuse selbst exzentrisch innerhalb eines Außengehäuses derart angeordnet ist, dass durch Verdrehen des Generatorgehäuses innerhalb des Außengehäuses der Abstand zwischen der Lagerungsmitte des Außengehäuses und der Generatorwellenachse veränderbar ist.

Eine wie vorstehend beschriebene exzentrische Anordnung kann in besonders einfachen Ausführungsformen durch ein einfaches Gleitlager gebildet sein. Eine besonders geringe Reibung und ein hoher Wirkungsgrad einer erfindungsgemäßen Spannvorrichtung ergibt sich jedoch, wenn die exzentrische Anordnung mindestens ein Wälzlager aufweist. Dazu können insbesondere ein Wälzlager oder mehrere Wälzlager derart zwischen dem Generatorgehäuse und einem Außengehäuse oder zwischen einem Gehäuseelement und einem Generatorgehäuse angeordnet sein, dass ein insgesamt reibungsarmes Verdrehen innerhalb der exzentrischen Anordnung möglich ist.

Alternativ oder in Ergänzung zu der vorstehend beschriebenen Möglichkeit, eine exzentrische Anordnung der Generatorwelle vorzusehen, kann an dem Generatorgehäuse selbst oder einem Gehäuseelement des Generatorgehäuses ein Führungsmechanismus vorgesehen sein, mittels welchem bei zwischen Generatorumlenkrolle und Zugmittel wirkenden Drehmomenten eine bestimmte Relativbewegung zwischen Generatorumlenkrolle und Halteelement in eine Spannrichtung vorgegeben wird. Als Führungsmechanismus im Sinne der Erfindung wird jedes Maschinenelement verstanden, das ein zwischen Generatorumlenkrolle und Zugmittel wirkendes Drehmoment in eine das Zugmittel spannende Relativbewegung zwischen Generatorumlenkrolle und Halteelement auf einer geführten Bahn bewirkt. Diesbezüglich wird beispielsweise auf die Möglichkeit verwiesen, dass die Brennkraftmaschine selbst oder ein fest mit der Brennkraftmaschine verbundener Nebenaggregatehalter als Halteelement dient und das Generatorgehäuse über mindestens ein Führungselement mit dem Halteelement verbunden ist. Ein derartiges Führungselement kann beispielsweise ein Schwenkhebel oder eine Anordnung mehrerer Schwenkhebel sein. Alternativ oder in Ergänzung können als Führungselemente auch Gleitführungen vorgesehen sein, die ein zwischen Generatorumlenkrolle und Zugmittel wirkendes Drehmoment in eine lineare oder gekrümmte durch die Gleitführung vorgegebene Bewegung umwandeln. Mittels gekrümmter oder beliebig anders gestalteter Gleitführung können dementsprechend nahezu beliebige Kennlinien zur bedarfsweisen Spannung des Zugmittels realisiert werden.

In einer weiteren praktischen Ausführungsform einer erfindungsgemäßen Spannvorrichtung ist die Generatorumlenkrolle gegenüber dem Halteelement derart angeordnet, dass ausgehend von einer Neutralstellung der Generatorumlenkrolle jedes zwischen Generatorumlenkrolle und Zugmittel wirkendes Drehmoment unabhängig von der Wirkrichtung des Drehmoments eine Erhöhung der Zugmittelspannung bewirkt. Mit anderen Worten ausgedrückt, erhöht sich die Zugmittelspannung in diesem Fall bei jeder betriebsbedingten Änderung unabhängig davon, ob sich der Startergenerator gerade im Starterbetrieb oder im Generatorbetrieb befindet.

Schließlich wird noch auf die Möglichkeit verwiesen, dass die Relativbewegung zwischen Generatorumlenkrolle und Halteelement durch mindestens ein Anschlagelement begrenzt sein kann. Insbesondere können zwei Anschläge vorgesehen sein, was insbesondere dann sinnvoll ist, wenn abhängig von der Richtung des wirkenden Drehmomentes eine unterschiedliche Spannrichtung vorgesehen ist. Mittels eines Anschlagelementes kann kinematischen Rahmenbedingungen der jeweils realisierten Ausführungsform Rechnung getragen werden. Insbesondere kann so verhindert werden, dass eine exzentrisch wirkende Spannvorrichtung über ein Maximum hinaus verdreht wird, was mit einem plötzlichen Spannungsabfall im Zugmittel verbunden sein könnte. Ferner kann die maximal mit der Spannvorrichtung erzeugbare Spannungserhöhung durch Anschläge begrenzt werden.

Es wird auch noch darauf verwiesen, dass ein Anschlagelement oder mehrere Anschlagelemente mit entsprechenden Dämpfungselementen ausgestattet sein können, um bei Erreichen der Anschläge keine unerwünschten Rückkopplungen oder "Schläge" in das Zugmittel zu verursachen.

Die Erfindung betrifft auch einen Zugmitteltrieb mit einer wie vorstehend beschriebenen Spannvorrichtung. Bei einem erfindungsgemäßen Zugmitteltrieb kann optional ein weiteres Funktionselement derart angeordnet sein, dass dieses Funktionselement nur nach Erreichen eines bestimmten, zwischen Generatorumlenkrolle und Zugmittel wirkenden MindestDrehmoments und/oder abhängig von der Wirkrichtung des Drehmoments wirksam wird. Als ein solches Funktionselement wird insbesondere ein zusätzliches Umlenkelement angesehen, welches derart angeordnet ist, dass es nur zeitweise in Kontakt mit dem Zugmittel gelangt, insbesondere bei sehr hohen in dem Zugmitteltrieb auftretenden Drehmomenten. Diesbezüglich wird insbesondere auf die Verwendung sogenannter Beruhigungsrollen verwiesen, die so angeordnet sind, dass ein Kontakt zwischen Zugmittel und Beruhigungsrolle nur im Starterbetrieb und/oder in anderen Betriebssituationen auftritt.

Weitere praktische Ausführungsformen der Erfindung sind nachfolgend im Zusammenhang mit den Zeichnungen beschrieben. Es zeigen:
- Fig. 1: eine schematische Darstellung eines Zugmitteltriebes mit drei Umlenkelementen,
- Fig. 2: eine erste Ausführungsform einer erfindungsgemäßen Spannvorrichtung in einer Schnittdarstellung,
- Fig. 3: eine Ansicht der in Figur 2 dargestellten Ausführungsform einer erfindungsgemäßen Spannvorrichtung in einer Ansicht gemäß dem Pfeil III in einer Neutralstellung,
- Fig. 4: die Spannvorrichtung aus Figur 3 im Starterbetrieb,
- Fig. 5: die Spannvorrichtung aus Figur 3 im Generatorbetrieb,
- Fig. 6: eine zweite Ausführungsform einer erfindungsgemäßen Spannvorrichtung in einem unbelasteten Zustand,
- Fig. 7: die in Figur 6 gezeigte Spannvorrichtung im Starterbetrieb,
- Fig. 8: eine dritte Ausführungsform einer erfindungsgemäßen Spannvorrichtung.

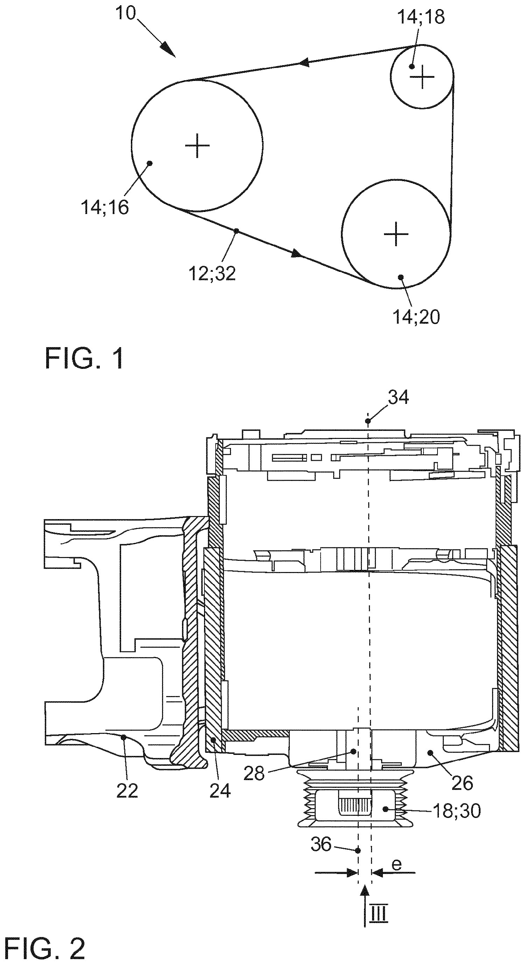

In Fig. 1 ist ein Zugmitteltrieb 10 in einer schematischen Darstellung gezeigt. Dabei handelt es sich bei dem in Fig. 1 gezeigten Zugmitteltrieb 10 um einen Riemenstartergenerator, der ein umlaufendes Zugmittel 12 in Form eines Riemens 32 umfasst, wobei der Riemen 32 hier exemplarisch um drei Umlenkelemente 14 geführt ist. Bei den Umlenkelementen 14 handelt es sich um eine Kurbelwellenriemenscheibe 16, eine Generatorriemenscheibe 18 und eine Klimakompressorriemenscheibe 20. Die Klimakompressorriemenscheibe 20 steht stellvertretend für ein optionales, beliebiges Nebenaggregat, das mit dem Zugmittel 12 angetrieben wird. Es können auch mehrere Nebenaggregate und dementsprechend mehrere solcher Riemenscheiben vorgesehen sein, so dass der Zugmitteltrieb 10 insgesamt vier, fünf oder mehr Umlenkelemente 14 umfasst. In einer besonders einfachen Form kann der Zugmitteltrieb 10 auch nur zwei Umlenkelemente 14 aufweisen, insbesondere eine Kurbelwellenriemenscheibe 16 und eine Generatorriemenscheibe 18.

Das Zugmittel 12 läuft in den gezeigten Ausführungsformen im Normalbetrieb des Zugmitteltriebes 10 gemäß den eingetragenen Pfeilen gegen den Uhrzeigersinn.

An einer Generatorriemenscheibe 18 eines wie in Figur 1 gezeigten oder wie vorstehend alternativ beschriebenen Zugmitteltriebes 10 können erfindungsgemäße Spannvorrichtungen ausgebildet sein. Alternativ kann es sich bei der Generatorriemenscheibe 18 auch um eine andere Art von Umlenkelement 14 handeln, beispielsweise ein Umlenkelement 14 für eine nicht dargestellte Kette oder für ein anderes Zugmittel 12.

Verschiedene Ausführungsformen erfindungsgemäßer Spannvorrichtungen 38 werden im Folgenden beispielhaft anhand der Figuren 2 bis 8 erläutert.

Figur 2 zeigt eine Schnittdarstellung durch ein Halteelement 22 in Form eines nur teilweise dargestellten Aggregatehalters mit einem darin befestigten Außengehäuse 24. Innerhalb des Außengehäuses 24 ist ein Generatorgehäuse 26 angeordnet. Das Generatorgehäuse ist drehbar gegenüber dem Außengehäuse 24 gelagert.

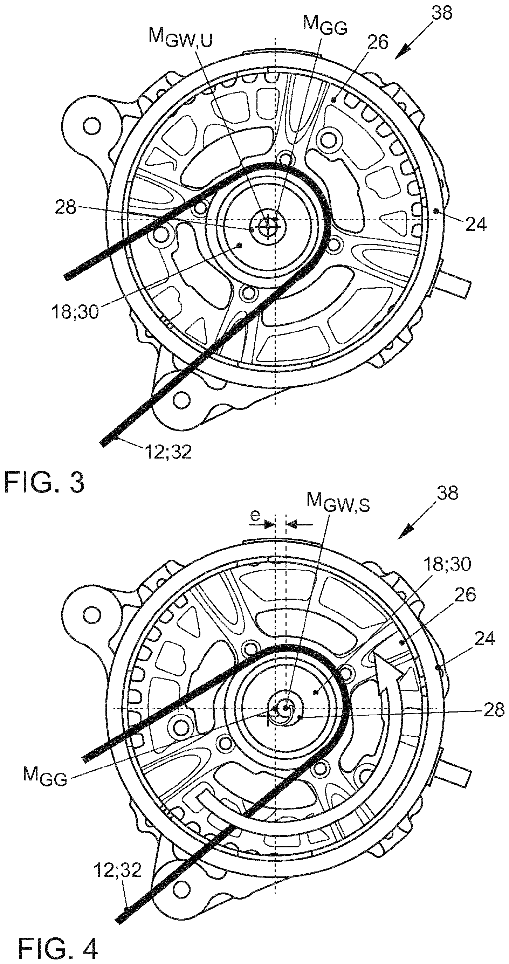

In dem Generatorgehäuse 26 ist eine Generatorwelle 28 drehbar gelagert. Die Generatorwelle 28 ist drehfest mit einer als Generatorumlenkrolle 30 dienenden Generatorriemenscheibe 18 verbunden. In Figur 2 ist die Generatorriemenscheibe 18 ohne Riemen dargestellt. Der über die Generatorriemenscheibe 18 geführte, als Zugmittel 12 dienende Riemen 32 ist in den Figuren 3 bis 5 dargestellt.

Mit der gestrichelten Linie 34 in Figur 2 ist die Lagerungsmitte des Außengehäuses 24 dargestellt. Mit der gestrichelten Linie 36 in Figur 2 ist die Wellenachse der Generatorwelle 28 gekennzeichnet. Wie zu erkennen ist, ist die Wellenachse gegenüber der Lagerungsmitte um den Abstand einer Exzentrizität e versetzt angeordnet. Die entlang der Lagerungsmitte führende Achse und die Wellenachse sind parallel zueinander angeordnet.

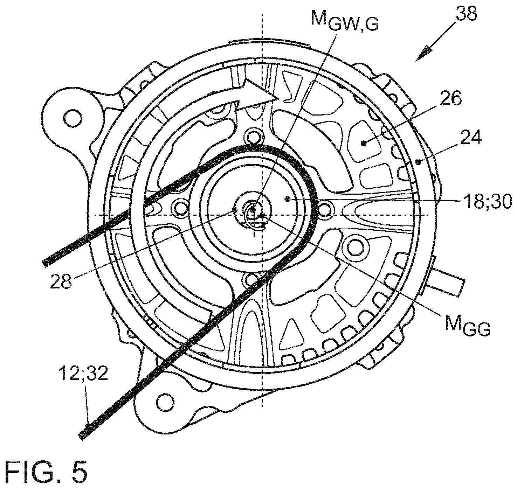

Wie im Folgenden insbesondere mit Hilfe der Figuren 3 bis 5 erläutert wird, bilden die geometrische Gestaltung des Außengehäuses 24 und des Generatorgehäuses 26 einen Teil einer erfindungsgemäßen Spannvorrichtung 38, deren Funktionsweise nun erläutert wird. Figur 3 zeigt die Spannvorrichtung 38 in einem unbelasteten Zustand (d.h. es wirkt kein Moment zwischen Riemen 32 und Generatorriemenscheibe 18), Figur 4 zeigt die Spannvorrichtung 38 im Starterbetrieb (Generatorriemenscheibe 18 treibt den Riemen 32 an), Figur 5 zeigt die Spannvorrichtung 38 im Generatorbetrieb (Generatorriemenscheibe 18 wird von dem Riemen 32 angetrieben).

Das Generatorgehäuse 26 weist eine kreisrunde Außenkontur auf, deren Mittelpunkt mit M_{GG} gekennzeichnet ist. Der Mittelpunkt der Generatorwelle, welcher mit M_{GW} gekennzeichnet ist, ist gegenüber dem Mittelpunkt des Generatorgehäuses M_{GG} um die Exzentrizität e versetzt.

Im unbelasteten Zustand des Riemens 32 befinden sich das Generatorgehäuse 26 und das Außengehäuse 24 in der in Figur 3 gezeigten Relativposition. In dieser Relativposition weist der Riemen 32 die geringste Riemenspannung auf, weil der Mittelpunkt der Generatorwelle M_{GW} so nah wie möglich an den beiden benachbarten, in Figur 3 nicht dargestellten Umlenkelementen 14 angeordnet ist.

Figur 4 zeigt die Relativposition zwischen Generatorgehäuse 26 und Außengehäuse 24 im Starterbetrieb, d.h. während der Generator den Riemen 32 antreibt. In diesem Betriebszustand wird der Riemen 32 von der Generatorriemenscheibe 18 angetrieben. Dementsprechend befindet sich das Zugtrum auf der unteren Seite und das Leertrum auf der oberen Seite. Das durch den Antrieb zwischen Generatorriemenscheibe 18 und Riemen 32 wirkende Antriebsmoment bewirkt eine Relativbewegung zwischen der Generatorwelle 28 gemeinsam mit der Generatorriemenscheibe 18 derart, dass der Mittelpunkt der Generatorwelle 28 von der in Figur 3 gezeigten mit M_{GW,U} gezeigten Position in die in Figur 4 mit M_{GW,S} gekennzeichnete Position verfahren wird. Dadurch vergrößert sich der Abstand der Generatorriemenscheibe 18 zu den beiden benachbarten, in Figur 4 nicht dargestellten Umlenkelementen. Die Spannung des Riemens 32 wird dementsprechend im Starterbetrieb erhöht. Je größer das zwischen der Generatorriemenscheibe 18 und dem Riemen 32 wirkende Moment ist, desto weiter verdreht sich die Generatorriemenscheibe 18 zusammen mit der Generatorwelle 28 in eine weiter entfernte Position, so dass gleichzeitig die Spannung des Riemens 32 weiter erhöht wird. In Figur 4 ist die Spannvorrichtung 38 in einem stark gespannten Zustand gezeigt.

Figur 5 zeigt die Relativposition der Generatorriemenscheibe 18 und der Generatorwelle 28 im Generatorbetrieb. Im Generatorbetrieb wird die Generatorriemenscheibe 18 von dem Riemen 32 angetrieben. Dementsprechend befindet sich das Zugtrum auf der Oberseite des Riemens 32 und das Leertrum auf der Unterseite des Riemens 32. Die Wirkrichtung des zwischen der Generatorriemenscheibe 18 und dem Riemen 32 wirkenden Moments ist dementsprechend umgekehrt zu der in Figur 4 gezeigten Wirkrichtung des Moments im Starterbetrieb. Der Mittelpunkt der Generatorwelle 28 wandert daher im Generatorbetrieb in die in Figur 5 mit M_{GW,G} gekennzeichnete Position. Da der Betrag des Momentes im Generatorbetrieb üblicherweise geringer ist, wird auch der Riemen 32 weniger gespannt als im Starterbetrieb. In Figur 5 ist die Spannvorrichtung 38 in einem nur mittelstark gespannten Zustand gezeigt. Die Spannung des Riemens 32 ist geringer als in dem in Figur 4 gezeigten Zustand.

Zusammenfassend kann festgehalten werden, dass mit einer erfindungsgemäßen Spannvorrichtung 38 der Riemen 32 eines Zugmitteltriebes 10 passiv, d.h. ohne Zuführung zusätzlicher Energie, stets ausreichend auf Spannung gehalten werden kann, wobei die erfindungsgemäße Spannvorrichtung 38 es ebenfalls ermöglicht, eine stärkere Spannung des Riemens 32 zu erzeugen, wenn das zwischen dem Riemen 32 und der Generatorriemenscheibe 18 wirkende Moment betragsmäßig größer ist.

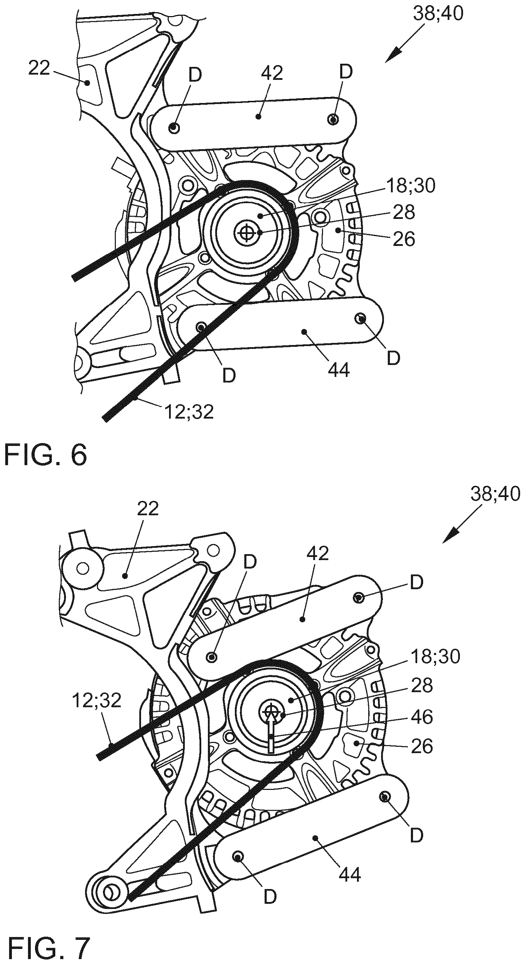

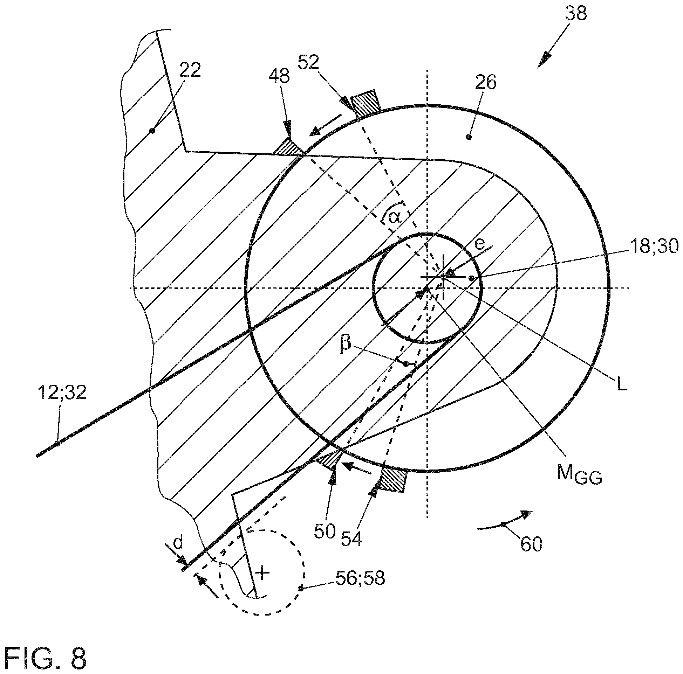

Im Folgenden werden in Verbindung mit den Figuren 6 und 7 sowie in Verbindung mit Figur 8 weitere Ausführungsformen erfindungsgemäßer Spannvorrichtungen beschrieben. Für identische oder zumindest funktionsgleiche Elemente werden im Folgenden die gleichen Bezugszeichen verwendet wie bei der Beschreibung der ersten Ausführungsform in Verbindung mit den Figuren 2 bis 5.

Bei der in den Figuren 6 und 7 dargestellten Ausführungsform einer erfindungsgemäßen Spannvorrichtung 38 ist das Generatorgehäuse 26 über einen Führungsmechanismus 40 mit dem Halteelement 22 verbunden. Bei dem Halteelement 22 handelt es sich wiederum um einen sogenannten Nebenaggregatehalter, der fest mit einer nicht dargestellten Brennkraftmaschine verbunden oder einstückig an dieser ausgebildet ist. Der Führungsmechanismus 40 umfasst in der gezeigten Ausführungsform ein erstes Führungselement 42 und ein zweites Führungselement 44. Sowohl das erste Führungselement 42 als auch das zweite Führungselement 44 ist mit einem Abschnitt an dem Halteelement 22 schwenkbar angelenkt. Sowohl das erste Führungselement 42 als auch das zweite Führungselement 44 ist mit dem jeweils anderen Ende schwenkbar an dem Generatorgehäuse 26 angelenkt. Die Drehpunkte der Führungselemente 42, 44 sind in den Figuren 6 und 7 mit D gekennzeichnet. Figur 6 zeigt eine erste Relativposition der Spannvorrichtung 38 im unbelasteten Zustand des Riemens 32. In diesem Zustand ist der Abstand der Generatorriemenscheibe 18 gegenüber den nicht dargestellten benachbarten Rollen minimal.

Figur 7 zeigt die zweite Ausführungsform der erfindungsgemäßen Spannvorrichtung 38 während des Starterbetriebes. In diesem Zustand ist das Generatorgehäuse 26 mitsamt der in diesem drehbar gelagerten Generatorwelle 28 und der drehfest mit der Generatorwelle 28 verbundenen Generatorumlenkrolle 30 in Richtung des Pfeils 46 nach oben verfahren. Dadurch ist die Spannung des Riemens 32 gegenüber der in Figur 6 gezeigten Relativanordnung zwischen Generatorgehäuse 26 und Halteelement 22 stärker gespannt.

Der Vollständigkeit halber wird darauf verwiesen, dass die in Figuren 6 und 7 gezeigte Ausführungsform einer erfindungsgemäßen Spannvorrichtung 38 funktional so ausgelegt werden kann wie die in den Figuren 2 bis 4 gezeigte Ausführungsform, indem die Führungselemente 42, 44 auf geeignete Weise konstruktiv gestaltet und an dem Generatorgehäuse 26 und den Halteelementen 22 angelenkt werden. In einem nicht dargestellten Generatorbetrieb verschwenken die Führungselemente 42, 44 ausgehend von der in Fig. 6 gezeigten Position nach unten und spannen den Riemen 32 ebenfalls.

Figur 8 zeigt eine dritte Ausführungsform einer erfindungsgemäßen Spannvorrichtung 38. Bei dieser Ausführungsform ist - ähnlich wie bei der ersten Ausführungsform gemäß den Figuren 2 bis 5 - eine Exzentrizität e vorgesehen. Allerdings ist die Exzentrizität e in dieser Ausführungsform zwischen der Mittelachse des Generatorgehäuses 26 und dem Lagerungspunkt L zwischen Generatorgehäuse 26 dem als Nebenaggregatehalter ausgebildeten Halteelement 22 vorgesehen. Die in Fig. 8 nicht erkennbare Generatorwelle hingegen ist konzentrisch zu dem Generatorgehäuse 26 angeordnet. Aufgrund der Exzentrizität e wird durch eine Drehbewegung des Generatorgehäuses 26 eine Relativbewegung zwischen der drehfest mit der nicht dargestellten Generatorwelle verbundenen Generatorumlenkrolle 30 und Halteelement 22 bewirkt wird. Auch bei dieser Ausführungsform führt ein zwischen dem Riemen 32 und der Generatorumlenkrolle 30 wirkendes Moment zu einer Relativbewegung zwischen Generatorumlenkrolle 30 und dem Halteelement 22 bzw. den (nicht beweglichen) nicht dargestellten benachbarten Umlenkelementen. Und auch bei dieser Ausführungsform ist die Spannvorrichtung 38 so ausgelegt, dass - ausgehend von einem unbelasteten Zustand sich die Spannung des Riemens 32 mit zunehmendem Drehmoment erhöht.

Bei der in Figur 8 gezeigten Ausführungsform sind ferner ein erstes Anschlagelement 48 und ein zweites Anschlagelement 50 vorgesehen, welche die Drehbewegung und somit die Auslenkung und Spannung des Riemens 32 auf einen Maximal-Winkelbereich von α bzw.β begrenzen, indem diese mit drehfest an dem Generatorgehäuse 26 ausgebildeten oder drehfest mit dem Generatorgehäuse 26 verbundenen Gegenflächen 52, 54 zusammenwirken. Die Gegenflächen 52, 54 sind in Figur 8 schematisch als in radialer Richtung nach außen hervorstehende Elemente dargestellt.

In Figur 8 ist mit einem gestrichelten Kreis ein Funktionselement 56 in Form einer Beruhigungsrolle 58 dargestellt. Diese Beruhigungsrolle 58 ist so angeordnet, dass sie nur dann mit dem Riemen 32 in Kontakt gerät und somit eine Wirkung auf den Zugmitteltrieb 10 hat, wenn die Generatorriemenscheibe 18 im Starterbetrieb in Richtung des Pfeils 60 in Fig. 8 so weit verdreht wird, dass der Riemen 32 um den Abstand d näher an die Generatorriemenscheibe 18 heranbewegt wird.

Insbesondere wir darauf verwiesen, dass Anschlagelemente und/oder ein oder mehrere Beruhigungsrollen auch in Verbindung mit anderen Ausführungsformen realisierbar sind.

### Bezugszeichenliste

- 10: Zugmitteltrieb
- 12: Zugmittel
- 14: Umlenkelement
- 16: Kurbelwellenriemenscheibe
- 18: Generatorriemenscheibe
- 20: Klimakompressorriemenscheibe
- 22: Halteelement
- 24: Außengehäuse
- 26: Generatorgehäuse
- 28: Generatorwelle
- 30: Generatorumlenkrolle
- 32: Riemen
- 34: gestrichelte Linie (Lagerungsmitte des Außengehäuses)
- 36: gestrichelte Linie (Wellenachse)
- 38: Spannvorrichtung
- 40: Führungsmechanismus
- 42: Führungselement (erstes)
- 44: Führungselement (zweites)
- 46: Pfeil
- 48: Anschlagelement (erstes)
- 50: Anschlagelement (zweites)
- 52: Gegenfläche
- 54: Gegenfläche
- 56: Funktionselement
- 58: Beruhigungsrolle
- 60: Pfeil

## Patentansprüche

1. Spannvorrichtung für einen Startergenerator einer Brennkraftmaschine umfassend mindestens ein seitens der Brennkraftmaschine festgelegtes Halteelement (22), ein Generatorgehäuse (26) und eine auf einer Generatorwelle (28) drehbar gegenüber dem Generatorgehäuse (26) gelagerte Generatorumlenkrolle (30) zur Umlenkung und zum bedarfsweisen Antreiben eines Zugmittels (12), wobei die Generatorumlenkrolle (30) gegenüber dem Halteelement (22) derart angeordnet ist, dass ein zwischen Generatorumlenkrolle (30) und Zugmittel (12) wirkendes Drehmoment eine das Zugmittel (12) spannende Relativbewegung zwischen Generatorumlenkrolle (30) und Halteelement (22) bewirkt,
**dadurch gekennzeichnet,**
**dass** an dem Generatorgehäuse (26) selbst oder einem Gehäuseelement des Generatorgehäuses (26) eine exzentrische Anordnung der Generatorwelle (28) derart vorgesehen ist, dass durch eine Drehbewegung des Generatorgehäuses (26) oder des Gehäuseelements eine Relativbewegung zwischen Generatorumlenkrolle (30) und Halteelement (22) bewirkt wird.

2. Spannvorrichtung nach dem vorstehenden Anspruch, **dadurch gekennzeichnet, dass** die Generatorumlenkrolle (30) gegenüber dem Halteelement (22) derart angeordnet ist, dass abhängig von der Wirkrichtung des Drehmoments eine Relativbewegung zwischen Generatorumlenkrolle (30) und Halteelement (22) in unterschiedliche Spannrichtungen bewirkt wird.

3. Spannvorrichtung nach einem der vorstehenden Ansprüche , **dadurch gekennzeichnet, dass** das Generatorgehäuse (26) selbst exzentrisch innerhalb eines Außengehäuses (24) derart angeordnet ist, dass durch Verdrehen des Generatorgehäuses (26) innerhalb des Außengehäuses (24) der Abstand zwischen der Lagerungsmitte des Außengehäuses (24) und der Generatorwellenachse veränderbar ist.

4. Spannvorrichtung nach einem der vorstehenden Ansprüche, **dadurch gekennzeichnet, dass** die exzentrische Anordnung mindestens ein Wälzlager aufweist.

5. Spannvorrichtung nach einem der vorstehenden Ansprüche, **dadurch gekennzeichnet, dass** an dem Generatorgehäuse (26) selbst oder an einem Gehäuseelement des Generatorgehäuses (26) ein Führungsmechanismus (40) vorgesehen ist, mittels welchem bei zwischen Generatorumlenkrolle (30) und Zugmittel (12) wirkenden Drehmomenten eine bestimmte Relativbewegung zwischen Generatorumlenkrolle (30) und Halteelement (22) in eine Spannrichtung vorgegeben wird.

6. Spannvorrichtung nach dem vorstehenden Anspruch, **dadurch gekennzeichnet, dass** die Brennkraftmaschine selbst oder ein fest mit der Brennkraftmaschine verbundener Nebenaggregatehalter als Halteelement (22) dient und das Generatorgehäuse (26) über mindestens ein Führungselement (42, 44) mit dem Halteelement (22) verbunden ist.

7. Spannvorrichtung nach einem der vorstehenden Ansprüche, **dadurch gekennzeichnet, dass** die Generatorumlenkrolle (30) gegenüber dem Halteelement (22) derart angeordnet ist, dass ausgehend von einer Neutralstellung der Generatorumlenkrolle (30) jedes zwischen Generatorumlenkrolle (30) und Zugmittel (12) wirkendes Drehmoment unabhängig von der Wirkrichtung des Drehmoments eine Erhöhung der Zugmittelspannung bewirkt.

8. Spannvorrichtung nach einem der vorstehenden Ansprüche, **dadurch gekennzeichnet, dass** die Relativbewegung zwischen Generatorumlenkrolle (30) und Halteelement (22) durch mindestens ein Anschlagelement (48, 50) begrenzt ist.

9. Zugmitteltrieb mit einer Spannvorrichtung nach einem der vorstehenden Ansprüche, **dadurch gekennzeichnet, dass** ein weiteres Funktionselement derart angeordnet ist, dass dieses Funktionselement nur nach Erreichen eines bestimmten zwischen Generatorumlenkrolle (30) und Zugmittel (12) wirkenden Mindestdrehmoments und/oder abhängig von der Wirkrichtung des Drehmoments wirksam wird.

## Claims

1. Clamping device for a starter generator of a combustion engine, comprising at least one retaining element (22) fixed on the side of the combustion engine, a generator housing (26), and a generator deflection roller (30) mounted rotatably with respect to the generator housing (26) on a generator shaft (28) for deflection and for driving a belt (12) as required, wherein the generator deflection roller (30) is arranged with respect to the retaining element (22) in such a way that a torque acting between the generator deflection roller (30) and the belt (12) produces a relative movement between the generator deflection roller (30) and the retaining element (22), which relative movement tensions the belt (12),
**characterized in that**
an eccentric arrangement of the generator shaft (28) is provided on the generator housing (26) itself or on a housing element of the generator housing (26) in such a way that a relative movement between the generator deflection roller (30) and the retaining element (22) is produced by a rotational movement of the generator housing (26) or of the housing element.

2. Clamping device according to the preceding claim, **characterized in that** the generator deflection roller (30) is arranged with respect to the retaining element (22) in such a way that a relative movement between the generator deflection roller (30) and the retaining element (22) is produced in different tensioning directions depending on the direction of action of the torque.

3. Clamping device according to any of the preceding claims, **characterized in that** the generator housing (26) itself is arranged eccentrically within an exterior housing (24) in such a way that, by rotating the generator housing (26) within the exterior housing (24), the distance between the bearing center of the exterior housing (24) and the generator shaft axis can be changed.

4. Clamping device according to any of the preceding claims, **characterized in that** the eccentric arrangement has at least one roller bearing.

5. Clamping device according to any of the preceding claims, **characterized in that** a guide mechanism (40) is provided on the generator housing (26) itself or on a housing element of the generator housing (26), by means of which guide mechanism (40) a specific relative movement between the generator deflection roller (30) and the retaining element (22) in a tensioning direction is predetermined given torques acting between the generator deflection roller (30) and the belt (12).

6. Clamping device according to the preceding claim, **characterized in that** the combustion engine itself or a secondary unit holder fixedly connected to the combustion engine serves as a retaining element (22), and the generator housing (26) is connected to the retaining element (22) via at least one guide element (42, 44).

7. Clamping device according to any of the preceding claims, **characterized in that** the generator deflection roller (30) is arranged with respect to the retaining element (22) in such a way that, starting from a neutral position of the generator deflection roller (30), any torque acting between the generator deflection roller (30) and the belt (12) produces an increase in the belt tension independently of the direction of action of the torque.

8. Clamping device according to any of the preceding claims, **characterized in that** the relative movement between the generator deflection roller (30) and the retaining element (22) is limited by at least one stop element (48, 50).

9. Belt drive having a clamping device according to any of the preceding claims, **characterized in that** a further functional element is arranged in such a way that this functional element becomes effective only after reaching a specific minimum torque acting between the generator deflection roller (30) and the belt (12), and/or depending on the direction of action of the torque.

## Revendications

1. Dispositif de serrage pour un générateur de démarrage d'un moteur à combustion interne comprenant au moins un élément de support (22) fixé par le moteur à combustion interne, un carter de générateur (26), et une poulie de déviation de générateur (30) logée sur un arbre de générateur (28) de manière rotative par rapport au carter de générateur (26) pour la déviation et pour l'entraînement, en cas de besoin, d'un moyen de traction (12), la poulie de déviation de générateur (30) étant disposée par rapport à l'élément de support (22) de telle façon qu'un couple agissant entre la poulie de déviation de générateur (30) et le moyen de traction (12) produit un mouvement relatif entre la poulie de déviation de générateur (30) et l'élément de support (22) qui tend le moyen de traction (12),
**caractérisé en ce que,**
sur le carter de générateur (26) même ou un élément de carter du carter de générateur (26), une disposition excentrique de l'arbre de générateur (28) est conçue de telle façon qu'un mouvement relatif entre la poulie de déviation de générateur (30) et l'élément de support (22) est produit par un mouvement de rotation du carter de générateur (26) ou de l'élément de carter.

2. Dispositif de serrage selon la revendication précédente, **caractérisé en ce que** la poulie de déviation de générateur (30) est disposée par rapport à l'élément de support (22) de telle façon qu'en fonction de la direction d'action du couple un mouvement relatif entre la poulie de déviation de générateur (30) et l'élément de support (22) est produit dans des directions de serrage différentes.

3. Dispositif de serrage selon l'une quelconque des revendications précédentes, **caractérisé en ce que** le carter de générateur (26) même est disposé de façon excentrique à l'intérieur d'un carter extérieur (24) de telle façon que la distance entre le centre de logement du carter extérieur (24) et l'axe d'arbre de générateur peut être modifiée par une rotation du carter de générateur (26) à l'intérieur du carter extérieur (24).

4. Dispositif de serrage selon l'une quelconque des revendications précédentes, **caractérisé en ce que** la disposition excentrique présente au moins un roulement à rouleaux.

5. Dispositif de serrage selon l'une quelconque des revendications précédentes, **caractérisé en ce que**, sur le carter de générateur (26) même ou sur un élément de carter du carter de générateur (26), un mécanisme de guidage (40) est conçu, au moyen duquel, dans le cas de couples agissant entre la poulie de déviation de générateur (30) et le moyen de traction (12), un mouvement relatif déterminé entre la poulie de déviation de générateur (30) et l'élément de support (22) dans une direction de serrage est prédéfini.

6. Dispositif de serrage selon l'une quelconque des revendications précédentes, **caractérisé en ce que** le moteur à combustion interne même ou un support d'organes auxiliaires sert comme élément de support (22) et le carter de générateur (26) est connecté à l'élément de support (22) à travers au moins un élément de guidage (42, 44).

7. Dispositif de serrage selon l'une quelconque des revendications précédentes, **caractérisé en ce que** la poulie de déviation de générateur (30) est disposée par rapport à l'élément de support (22) de telle façon que, partant de la position neutre de la poulie de déviation de générateur (30), chaque coupe agissant entre la poulie de déviation de générateur (30) et le moyen de traction (12) produit, indépendamment de la direction d'action du couple, une augmentation de la tension du moyen de traction.

8. Dispositif de serrage selon l'une quelconque des revendications précédentes, **caractérisé en ce que** le mouvement relatif entre la poulie de déviation de générateur (30) et l'élément de support (22) est limité par au moins un élément de butée (48, 50).

9. Entraînement de moyen de traction au moyen d'un dispositif de serrage selon l'une quelconque des revendications précédentes, **caractérisé en ce qu'**un autre élément fonctionnel est disposé de telle façon, que cet élément fonctionnel ne devient effectif qu'après l'atteinte d'un couple minimal agissante entre la poulie de déviation de générateur (30) et le moyen de traction (12) et/ou en fonction de la direction d'action du couple.
